## Europäisches Patentamt
## European Patent Office
## Office européen des brevets

(19)

(11) Veröffentlichungsnummer: **0 095 065**
**B1**

(12)

# EUROPÄISCHE PATENTSCHRIFT

(45) Veröffentlichungstag der Patentschrift:
31.07.85

(51) Int. Cl.⁴: **C 01 C 3/16, C 05 C 7/02**

(21) Anmeldenummer: 83104356.7

(22) Anmeldetag: 03.05.83

(54) **Lagerstabile wässrige Cyanamidlösungen und Verfahren zu ihrer Herstellung.**

(30) Priorität: 21.05.82 DE 3219054

(43) Veröffentlichungstag der Anmeldung:
30.11.83 Patentblatt 83/48

(45) Bekanntmachung des Hinweises auf die Patenterteilung:
31.07.85 Patentblatt 85/31

(84) Benannte Vertragsstaaten:
BE DE FR GB IT SE

(56) Entgegenhaltungen:
BE - A - 868 951
DE - A - 1 914 149
DE - A - 2 047 907
DE - A - 2 642 023
DE - C - 673 950
US - A - 2 982 616
US - A - 3 093 454
US - A - 3 295 926

CHEMICAL ABSTRACTS, Band 74, Nr. 14, 5. April 1971, Seite 132, Nr. 66146m, Columbus, Ohio, USA A.A. PIMENOVA et al.: "Effect of some additives to calcium oxide on the synthesis of calcium cyanamide and the stability of the product"
CHEMICAL ABSTRACTS, Band 76, Nr. 2, 10. Januar 1972, Seite 214, Nr. 7071b, Columbus, Ohio, USA L.N.

(73) Patentinhaber: SKW Trostberg Aktiengesellschaft, Dr.-Albert-Frank-Strasse 32 Postfach 1150/1160, D-8223 Trostberg (DE)

(72) Erfinder: Weiss, Stefan, Dr., Sonnenleite 8, D-8223 Trostberg (DE)

(74) Vertreter: Weickmann, Heinrich, Dipl.-Ing. et al, Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820, D-8000 München 86 (DE)

(56) Entgegenhaltungen: (Fortsetzung)
SEMENOVA et al.: "Stability of cyanamide in various media"
CHEMICAL ABSTRACTS, Band 93, Nr. 18, 18. November 1980, Seite 133, Nr. 170473u, Columbus, Ohio, USA

**Beschreibung**

Die Erfindung bezieht sich auf ein Verfahren zur Stabilisierung von 20 bis 80 Gew.-Cyanamid enthaltenden wäßrigen Cyanamidlösungen, insbesondere von technischen, handelsüblichen Cyanamidlösungen.

Wäßrige Cyanamidlösungen, vor allem in ca. 50%iger Zubereitung, dienen sowohl als preiswertes Ausgangsmaterial für die Herstellung von wichtigen Pflanzenschutz-, technischen Konservierungs-, Desinfektions- und Arzneimitteln als auch direkt als Agrochemikalie.

Es ist jedoch bekannt, daß Cyanamidlösungen beim Lagern instabil sind, vor allem bei Lagertemperaturen oberhalb 20° C. Im Bereich unter pH 3 und oberhalb pH 12 bildet sich dabei Harnstoff, während ab pH 8, bevorzugt bei pH 9,0 bis pH 10,0, die Dimerisierung zu Dicyandiamid vorherrscht. Am beständigsten sind wäßrige Cyanamidlösungen innerhalb des pH-Intervalls von 3 bis 5, weshalb handelsübliche, bereits stabilisierte Lösungen einen pH-Wert von etwa 4 bis 4,5 zeigen. Diese handelsüblichen Cyanamidlösungen sind bei Lagertemperaturen zwischen 10 und 20°C annähernd 6 Monate haltbar, bevor ihr Cyanamidgehalt unter Dimerisierung zu Dicyandiamid merklich abfällt. Diese Grenzen sind sowohl hinsichtlich des Temperaturbereichs als auch des Verarbeitungszeitraums technisch nicht befriedigend.

Es sind wäßrige Cyanamidlösungen bekannt, die mit Äthylenglykoldiacetat stabilisiert werden, wobei zur Erreichung einer hohen Lagerstabilität der Cyanamidlösung große Mengen an Ester zugesetzt werden müssen (US-A-3 295 926).

Gemäß der deutschen Patentschrift DE-C-2 642 023 läßt sich die Haltbarkeit wäßriger Cyanamidlösungen durch Zusatz geringer Mengen eines Carbonsäureesters, der sich von einer aliphatischen Carbonsäure mit einem $pK_a^{25\,°C}$-Wert von 3,8 oder darunter ableitet, ganz erheblich verbessern.

Die Verwendung von Carbonsäureestern zur Stabilisierung wäßriger Cyanamidlösungen hat jedoch den Nachteil, daß es sich bei den Carbonsäureestern, vor allem bei den Ameisensäureestern, um niedrig siedende, flüchtige und leicht entflammbare Flüssigkeiten handelt und der vorzugsweise verwendete Ameisensäurepropylester eine verhältnismäßig teuere Substanz darstellt, da sie nicht großtechnisch hergestellt wird.

Außerdem sollten die wäßrigen Cyanamidlösungen, die als Pflanzenbehandlungsmittel, z. B. zur Unkrautbekämpfung in Zwiebeln und Gemüsekulturen, eingesetzt werden, nur solche Stabilisatorzusätze enthalten, die von den Nutzpflanzen als Nährstoffe verwendet werden können, da das von den Pflanzen aufgenommene Cyanamid selbst vollständig abgebaut, d. h. in pflanzenverfügbare Stickstoff-Formen umgewandelt wird und Cyanamid deshalb bei der Verwendung als Agrochemikalie keinerlei schädliche Rückstände hinterläßt.

Die Erfindung stellte sich daher die Aufgabe, ein verbessertes und möglichst billiges Verfahren zur Stabilisierung wäßriger Cyanamidlösungen zu schaffen, das trotzdem den wäßrigen Cyanamidlösungen, vor allem den technischen 50%igen Cyanamidlösungen, gute Haltbarkeit auch unter extremen Lagerungsbedingungen über einen längeren Zeitraum hinweg verleiht.

Es wurde nun überraschenderweise gefunden, daß Magnesiumsalze zur Erhöhung der Lagerstabilität wäßriger Cyanamidlösungen, die 20 bis 80 Gew.-% Cyanamid enthalten können, geeignet sind, und zwar in Zusatzmengen von 0,005 bis 0,5 Gew.-% zweiwertiger Magnesiumkationen. Vor allem die Haltbarkeit technischer, etwa 45 bis 55, insbesondere ca. 50%iger Cyanamidlösungen kann mit dem erfindungsgemäßen Verfahren ganz erheblich verbessert werden, wozu in der Regel Zusätze von 0,04 bis 0,06 Gew.-% $Mg^{2+}$ (entsprechend 0,3 bis 0,5 Gew.-% $MgCl_2 \times 6\,H_2O$ oder 0,4 bis 0,6 Gew.-% $MgSO_4 \times 7\,H_2O$) erforderlich sind. Durch den erfindungsgemäßen Zusatz von beispielsweise 0,3 bis 0,5 Gew.-% $MgCl_2 \times 6\,H_2O$ (0,036 bis 0,06 Gew.-% $Mg^{2+}$) oder 0,4 bis 0,6 Gew.-% $MgSO_4 \times 7\,H_2O$ (0,039 bis 0,059 Gew.-% $Mg^{2+}$) zu den technischen, ca. 50%igen wäßrigen Cyanamidlösungen kann sogar eine gegenüber der Stabilisierung mit Ameisensäureestern noch verbesserte Haltbarkeit erzielt werden.

Die Tatsache, daß Magnesiumsalze in Zusatzmengen von 0,005 bis 0,5 Gew.-% $Mg^{2+}$ in hervorragender Weise zur Stabilisierung wäßriger Cyanamidlösungen, insbesondere technischer Cyanamidlösungen, herangezogen werden können, überrascht sehr und konnte aufgrund der bisherigen Kenntnisse über das Verhalten von Cyanamid in seinen wäßrigen Lösungen nicht erwartet werden, wonach die Stabilität wäßriger Cyanamidlösungen durch die Anwesenheit von Metallionen vermindert wird. So werden in den Patentschriften US-A-2 982 616 und CA-A-1 080 150 die verdünnten technischen, wäßrigen Cyanamidlösungen vor dem Aufkonzentrieren mit einem Ionenaustauscher (Amberlite IRC-50) zur Entfernung von Calciumionen behandelt, um die Sicherheit beim Vakuumeindampfen zu erhöhen.

Von Bedeutung für die vorliegende Erfindung ist, daß bereits kleine Mengen an $Mg^{2+}$ (ca. 0,04 bis 0,06 Gew.-% = 400 bis 600 ppm) ausreichend wirksam sind. Die optimale Zusatzmenge hängt von der Konzentration und der Vorbehandlung der Cyanamidlösungen sowie den vorgegebenen Lagerungstemperaturen ab und ist durch Vorversuche zu ermitteln.

Magnesiumsalze sind billige, nicht flüchtige, nicht brennbare und ungiftige Substanzen. Magnesium ist auch ein wichtiger Mikronährstoff für Pflanzen. Das Magnesiumion kann zur erfindungsgemäßen Stabilisierung wäßriger Cyanamidlösungen in Form anorganischer Salze, vorzugsweise als $MgCl_2 \times 6\,H_2O$ oder $MgSO_4 \times 7\,H_2O$, wie auch in Form organischer Salze, z. B. als Magnesiumacetat oder -formiat, eingesetzt werden. Es können jedoch neben den einzelnen Magnesiumsalzen auch Mischungen verschiedener Magnesiumsalze verwendet werden, wobei sich sogar noch kleine synergistische Stabilisierungseffekte erzielen lassen.

Zur Stabilisierung technischer, handelsüblicher Cyanamidlösungen kann man die entsprechenden Magnesiumsalze zu den bereits auf einen Cyanamidgehalt von etwa 50 Gew.-% aufkonzentrierten Cyanamidlösungen zusetzen. Im Gegensatz zur Stabilisierung mit den flüchtigen Carbonsäureestern kann jedoch der Magnesiumsalz-Stabilisator auch bereits zu den Dünnlösungen vor dem Aufkonzentrieren im Vakuum zugegeben werden, wodurch die Sicherheit beim Vakuumeindampfen der verdünnten technischen Cyanamidlösungen erhöht wird.

Erfindungsgemäß sollen die mit Magnesiumsalzen stabilisierten Cyanamidlösungen nach Zusatz der entsprechenden Magnesiumsalze einen pH-Wert (bei 20°C) von etwa 5 bis 3, vorzugsweise einen pH-Wert von pH 3,5 bis pH 4,5, aufweisen (Messung des pH-Werts mit einer geeichten, handelsüblichen Glaselektrode). Falls es erforderlich ist, erfolgt die Einstellung des pH-Werts auf etwa 5 bis 3, vorzugsweise auf pH = 3,5 bis 4,5, mit einer Mineralsäure, z. B. mit Phosphorsäure, und/oder einer organischen Säure. Selbstverständlich kann man auch in der Weise verfahren, daß man vor der Zugabe der erfindungsgemäßen Stabilisatoren einen pH-Wert von etwa pH 3,8 bis pH 4,5, vorzugsweise mit verdünnter Phosphorsäure, einstellt und dann die entsprechenden Magnesiumsalze zusetzt, wobei sich eine anschließende Korrektur des pH-Werts im allgemeinen erübrigt.

Durch den erfindungsgemäßen Zusatz von 0,005–0,5 Gew.-% Magnesiumionen werden die Cyanamidlösungen kaum verunreinigt. Die Entfernung des Magnesiumsalz-Stabilisators, der im Gegensatz zu den Carbonsäureestern nicht flüchtig ist, braucht bei der Weiterverarbeitung der Cyanamidlösungen normalerweise nicht vorgenommen zu werden.

Ein weiterer Vorteil der vorliegenden Erfindung ist die Tatsache, daß technische, ca. 50%ige Cyanamidlösungen noch wirksamer als bisher stabilisiert werden können. Durch die erfindungsgemäße Stabilisierung technischer Cyanamidlösungen mit Magnesiumsalzen wird die Sicherheit sowohl beim Transport und bei der Lagerung als auch beim Umgang mit den handelsüblichen, ca. 50%igen Cyanamidlösungen weiter gesteigert.

Die nachfolgenden Beispiele sollen die Stabilisierung wäßriger Cyanamidlösungen mit Hilfe geringer Mengen von Magnesiumsalzen veranschaulichen, ohne die vorliegende Erfindung in irgendeiner Weise einzuschränken.

## Beispiele

Alle Prozentangaben beziehen sich auf Gewichts-%. Alle Mengenangaben für die zugesetzten Stoffe beziehen sich auf die wäßrigen Cyanamidlösungen.

## Beispiel 1

Die Haltbarkeit von 50%igen wäßrigen technischen, handelsüblichen Cyanamidlösungen bei 20 und 30°C kann im Vergleich zur Stabilisierung mit Ameisensäure-n-propylester durch Zusatz von Magnesiumsalzen, z. B. Magnesiumchlorid oder -nitrat sogar noch verbessert werden, wie die Tabelle 1 zeigt.

## Beispiel 2

Die Stabilität von 50%igen wäßrigen technischen, handelsüblichen Cyanamidlösungen z. B. bei 30°C Lagerungstemperatur wird durch Zusatz von 0,4% $MgCl_2 \cdot 6 H_2O$ (= 0,19% $MgCl_2$) oder 0,4% $MgSO_4 \cdot 7 H_2O$ (= 0,2% $MgSO_4$) ganz erheblich verbessert, wobei eine noch größere Haltbarkeit als mit Ameisensäure-n-propylester erzielt wird. Die Ergebnisse sind in der Tabelle 2 enthalten.

## Beispiel 3

Auch bei erhöhten Lagerungstemperaturen z. B. bei 40°C kann die Haltbarkeit von 50%igen wäßrigen technischen Cyanamidlösungen, die in dieser Form als Ausgangsmaterial für die Herstellung von Pflanzenschutz-, technischen Konservierungs-, Desinfektions- und Arzneimitteln sowie als Agrochemikalie eingesetzt werden, gegenüber der Stabilisierung mit Ameisensäure-n-propylester mit Hilfe von Magnesiumsalzen, z. B. Magnesiumchlorid, -nitrat und -sulfat, noch erhöht werden, wobei auch Mischungen verschiedener Magnesiumsalze verwendet werden können, was zu einer synergistischen Wirkungssteigerung führen kann (Tabelle 3).

## Beispiel 4

Die Tabelle 4 zeigt die erheblich verbesserte Haltbarkeit einer wäßrigen technischen, handelsüblichen Cyanamidlösung durch den Zusatz von Magnesiumchlorid beim pH-Wert von 3,5, die mit verdünnter Salzsäure eingestellt wurde.

## Beispiel 5

Es wurde die Haltbarkeit wäßriger Cyanamidlösungen, die durch Aufkonzentrieren einer 30%igen wäßrigen technischen Cyanamidlösung ohne Zusatz und mit Zusatz von Magnesiumchlorid am Rotationsverdampfer bei 35°C im Vakuum einer Wasserstrahlpumpe hergestellt worden waren, bei 30 und 40°C Lagerungstemperatur untersucht. Aus der Tabelle 5 geht hervor, daß die Lösungen mit 0,24% $MgCl_2$, das vor dem Einengen in Form von $MgCl_2 \cdot 6 H_2O$ zugegeben wurde, bei 30 und 40°C erheblich stabiler sind als die ohne Zusatz von Magnesiumchlorid hergestellten Cyanamidlösungen.

## Beispiel 6

Lagerungsversuche bei 30 und 40°C mit einer 78%igen wäßrigen Cyanamidlösung, die durch Auflösen von technisch reinem Cyanamid in Wasser hergestellt und anschließend mit 0,2% $MgCl_2$ 6 $H_2O$ (= 0,094% $MgCl_2$) bzw. 0,25% Ameisensäure-n-propylester versetzt wurde; Korrektur des pH-Werts mit verdünnter Phosphorsäure auf pH = 3,8. Die entsprechenden Ergebnisse finden sich in der Tabelle 6.

Tabelle 1

Verbesserung der Haltbarkeit von 50%igen wäßrigen technischen, handelsüblichen Cyanamidlösungen bei 20 und 30°C Lagerungstemperatur durch Zusatz von Magnesiumchlorid oder -nitrat im Vergleich zur Stabilisierung mit Ameisensäure-n-propylester (Stand der Technik); pH-Wert der Lagerungsproben vor Lagerbeginn = 4,2.

50%ige wäßrige technische Cyanamidlösung (wie im Handel erhältlich)
(Gehalt dieser Lösung bei Lagerbeginn = 50,0%;
die Einstellung der pH-Werte erfolgte vor Lagerbeginn mit verdünnter Phosphorsäure)

| ohne Zusatz (Original-lösung) pH = 4,2 | mit Zusatz von 0,25% Ameisensäure-n-propylester pH = 4,2 | mit Zusatz von 0,125% $MgCl_2 \cdot 6 H_2O$ (= 0,015% $Mg^{2+}$) pH = 4,2 | mit Zusatz von 0,25% $MgCl_2 \cdot 6 H_2O$ (= 0,03% $Mg^{2+}$) pH = 4,2 | mit Zusatz von 0,5% $MgCl_2 \cdot 6 H_2O$ (= 0,06% $Mg^{2+}$) pH = 4,2 | mit Zusatz von 0,25% $Mg(NO_3)_2 \cdot 6 H_2O$ (= 0,024% $Mg^{2+}$) pH = 4,2 |
|---|---|---|---|---|---|
| Cyanamidgehalt nach einer Lagerungsdauer von 360 Tagen bei 20°C | | | | | |
| 44,6% | 47,0% | 47,7% | 48,3% | 48,3% | 48,1% |
| Cyanamidgehalt nach einer Lagerungsdauer von 120 Tagen bei 30°C | | | | | |
| <35% | 45,1% | 44,6% | 46,7% | 47,3% | 45,5% |

4

Tabelle 2

Verbesserung der Stabilität von 50%igen wäßrigen technischen, handelsüblichen Cyanamidlösungen bei 30°C Lagerungstemperatur durch Zusatz von 0,4% $MgCl_2 \cdot 6 H_2O$ ( = 0,19% $MgCl_2$) oder 0,4% $MgSO_4 \cdot 7 H_2O$ ( = 0,2% $MgSO_4$) im Vergleich zur Stabilisierung mit 0,25% Ameisensäure-n-propylester; pH-Wert der Lagerproben vor Lagerbeginn = 4,0.

| 50%ige wäßrige technische, handelsübliche Cyanamidlösung | | | |
|---|---|---|---|
| ohne Zusatz (Originallösung) | mit Zusatz von 0,25% Ameisensäure-n-propylester | mit Zusatz von 0,4% $MgCl_2 \cdot 6 H_2O$ ( = 0,19% $MgCl_2$) ( = 0,048 $Mg^{2+}$) | mit Zusatz von 0,4% $MgSO_4 \cdot 7 H_2O$ ( = 0,2% $MgSO_4$) ( = 0,039% $Mg^{2+}$) |
| bei Lagerbeginn auf pH 4,0 mit $H_3PO_4$ eingestellt | bei Lagerbeginn auf pH 4,0 mit $H_3PO_4$ eingestellt | bei Lagerbeginn auf pH 4,0 mit $H_3PO_4$ eingestellt | bei Lagerbeginn auf pH 4,0 mit $H_3PO_4$ eingestellt |

Cyanamidgehalt nach einer Lagerungszeit bei 30°C von

| | | | | |
|---|---|---|---|---|
| 0 Tagen: | 50,0% Cyanamid | 49,9% Cyanamid | 49,8% Cyanamid | 49,8% Cyanamid |
| 120 Tagen: | <35% Cyanamid | 45,9% Cyanamid | 47,5% Cyanamid | 47,2% Cyanamid |
| 150 Tagen: | ≤35% Cyanamid | 43,0% Cyanamid | 46,2% Cyanamid | 45,1% Cyanamid |

Tabelle 3

Verbesserung der Haltbarkeit von 50%igen wäßrigen, technischen Cyanamidlösungen bei erhöhter Lagerungstemperatur von 40°C durch Zusatz eines Magnesiumsalzes oder einer Mischung von Magnesiumsalzen mit Vergleich zur Stabilisierung mit Ameisensäure-n-propylester; pH-Wert vor Lagerbeginn = 4,1.

50%ige wäßrige technische Cyanamidlösung (wie im Handel erhältlich) (Gehalt dieser Lösung vor Lagerbeginn = 50,0%; die Einstellung der pH-Werte erfolgte vor Lagerbeginn mit verdünnter Phosphorsäure)

| ohne Zusatz (Original-lösung) | mit Zusatz von 0,25% Ameisensäure-n-propylester | mit Zusatz von 0,4% $MgCl_2 \cdot 6 H_2O$ ( = 0,048% $Mg^{2+}$) | mit Zusatz von 0,25% $MgCl_2 \cdot 6 H_2O$ + 0,25% $MgSO_4 \cdot 7 H_2O$ ( = 0,055% $Mg^{2+}$) | mit Zusatz von 0,25% $MgCl_2 \cdot 6 H_2O$ + 0,25% $Mg(NO_3)_2 \cdot 6 H_2O$ ( = 0,054% $Mg^{2+}$) | mit Zusatz von 0,3% $MgCl_2 \cdot 6 H_2O$ + 0,2% Ameisensäure-n-propylester |
|---|---|---|---|---|---|

Cyanamidgehalt nach einer Lagerungsdauer von 45 Tagen bei 40°C

| <38% | 45,6% | 46,8% | 47,5% | 46,9% | 47% |
|---|---|---|---|---|---|

Tabelle 4

Verbesserte Haltbarkeit einer wäßrigen technischen, handelsüblichen Cyanamidlösung bei 40° C durch Zusatz von Magnesiumchlorid, wobei die entsprechenden pH-Werte der einzelnen Lagerproben mit verdünnter Salzsäure eingestellt wurden.

| Lagerungs-temperatur = 40° C | ohne Zusatz (technische Standardlösung) bei Lagerbeginn mit Salzsäure auf pH = 3,5 eingestellt | mit Zusatz von 0,5% $MgCl_2 \cdot 6 H_2O$ ( = 0,24% $MgCl_2$) bei Lagerbeginn mit Salzsäure auf pH = 3,5 eingestellt | mit Zusatz von 0,5% $MgCl_2 \cdot 6 H_2O$ ( = 0,24% $MgCl_2$) bei Lagerbeginn mit Salzsäure auf pH = 3,0 eingestellt | mit Zusatz von 1% $MgCl_2 \cdot 6 H_2O$ bei Lagerbeginn mit Salzsäure auf pH = 3,5 eingestellt |
|---|---|---|---|---|
| Cyanamidgehalt nach einer Lagerungsdauer von | | | | |
| 0 Tagen: | 49,3% Cyanamid | 49,1% Cyanamid | 49,1% Cyanamid | 48,8% Cyanamid |
| 43 Tagen: | < 30% Cyanamid | 46,6% Cyanamid | 46,1% Cyanamid | 45,3% Cyanamid |

6

Tabelle 5

Vergleich der Haltbarkeit wäßriger Cyanamidlösungen bei 30 und 40°C, die durch Aufkonzentrieren einer 30%igen wäßrigen technischen Cyanamidlösung (»Dünnlösung«) ohne Zusatz und mit Zusatz von Magnesiumchlorid am Rotationsverdampfer im Vakuum einer Wasserstrahlpumpe bei 35°C hergestellt worden waren (der Zusatz von $MgCl_2 \cdot 6 H_2O$ erfolgte vor dem Einengen). Der Zusatz von Ameisensäure-n-propylester ist vor dem Einengen wegen seiner Flüchtigkeit nicht möglich (Sdp. 80,9°C).

| Lagerproben: | 47,4%ige Cyanamidlösung: ohne Zusatz, nach dem Einengen wurde pH = 4,0 mit $H_3PO_4$ eingestellt | 47,4%ige Cyanamidlösung: enthält 0,24% $MgCl_2$ (Zugabe als $MgCl_2 \cdot 6 H_2O$ vor dem Einengen); nach dem Einengen wurde pH = 4,0 mit $H_3PO_4$ eingestellt | 56,6%ige Cyanamidlösung: ohne Zusatz, nach dem Einengen wurde pH = 4,0 mit $H_3PO_4$ eingestellt | 56,6%ige Cyanamidlösung: enthält 0,24% $MgCl_2$ (Zugabe als $MgCl_2 \cdot 6 H_2O$ vor dem Einengen); nach dem Einengen wurde pH = 4,0 mit $H_3PO_4$ eingestellt |
|---|---|---|---|---|
| **Cyanamidgehalt bei 30°C Lagerung nach** | | | | |
| 0 Tagen | 47,4% Cyanamid | 47,4% Cyanamid | 56,6% Cyanamid | 56,6% Cyanamid |
| 120 Tagen | | | <40% Cyanamid | 53,0% Cyanamid |
| 150 Tagen | ≤35% Cyanamid | 45,1% Cyanamid | | |
| **Cyanamidgehalt bei 40°C Lagerung nach** | | | | |
| 0 Tagen | 47,4% Cyanamid | 47,4% Cyanamid | 56,6% Cyanamid | 56,6% Cyanamid |
| 45 Tagen | | | <45% Cyanamid | 56,6% Cyanamid |
| 65 Tagen | <30% Cyanamid | 44,1% Cyanamid | | |

Tabelle 6

Lagerungsversuche bei 30 und 40°C mit einer 78%igen Cyanamidlösung, die durch Auflösen von technisch reinem, kristallinem Cyanamid in Wasser bereitet wurde.

| 78%ige Lösung von Cyanamid in Wasser:<br>hergestellt durch Auflösen von technischem, kristallinem Cyanamid in Wasser | | |
|---|---|---|
| Lagerproben: | ohne Zusatz<br>bei Lagerungsbeginn<br>auf pH = 3,8 mit<br>$H_3PO_4$ eingestellt | mit Zusatz von<br>0,25% Ameisen-<br>säure-n-propylester<br><br>bei Lagerungsbeginn<br>auf pH = 3,8 mit<br>$H_3PO_4$ eingestellt | mit Zusatz von<br>0,2% $MgCl_2 \cdot 6\,H_2O$<br>(= 0,094% $MgCl_2$)<br>(= 0,024% $Mg^{2+}$)<br>bei Lagerungsbeginn<br>auf pH = 3,8 mit<br>$H_3PO_4$ eingestellt |
| **Cyanamidgehalt<br>bei 30°C Lagerung nach** | | | |
| 0 Tagen: | 78,3% Cyanamid | 78,1% Cyanamid | 78,1% Cyanamid |
| 85 Tagen: | <60% Cyanamid | 74,2% Cyanamid | 75,7% Cyanamid |
| **Cyanamidgehalt<br>bei 10°C Lagerung nach** | | | |
| 0 Tagen: | 78,3% Cyanamid | 78,1% Cyanamid | 78,1% Cyanamid |
| 33 Tagen: | <60% Cyanamid | 72,5% Cyanamid | 72,8% Cyanamid |

**Patentansprüche**

1. Stabilisierte, wäßrige, 20 bis 80 Gew.-% Cyanamid enthaltende Lösung, gekennzeichnet durch einen Gehalt von 0,005 bis 0,5 Gew.-% zweiwertiger Magnesiumkationen in Form anorganischer oder/ und organischer Magnesiumsalze.

2. Lösung nach Anspruch 1, gekennzeichnet durch einen Gehalt von 45 bis 55 Gew.-% Cyanamid.

3. Lösung nach Anspruch 1 oder 2, gekennzeichnet durch einen Gehalt von 0,04 bis 0,06 Gew.-% Magnesiumionen.

4. Lösung nach Anspruch 3, gekennzeichnet durch einen Gehalt von 0,3 bis 0,5 Gew.-% $MgCl_2 \times 6\,H_2O$ oder 0,4 bis 0,6 Gew.-% $MgSO_4 \times 7\,H_2O$.

5. Lösung nach einem der vorhergehenden Ansprüche, gekennzeichnet durch einen pH-Wert zwischen 3 und 5.

6. Verfahren zur Erhöhung der Lagerstabilität (Haltbarkeit) einer 20 bis 80 Gew.-% Cyanamid enthaltenden, wäßrigen Lösung, dadurch gekennzeichnet, daß man die wäßrige Cyanamidlösung mit 0,005 bis 0,5 Gew.-% zweiwertiger Magnesiumkationen (bezogen auf die Cyanamidlösung) in Form anorganischer oder/und organischer Magnesiumsalze versetzt.

7. Verfahren nach Anspruch 6, dadurch gekennzeichnet, daß man handelsübliche, bereits stabilisierte, 45 bis 55%ige wäßrige Cyanamidlösungen mit 0,005 bis 0,5 Gew.-% Magnesiumionen versetzt.

8. Verfahren nach den Ansprüchen 6 oder 7, dadurch gekennzeichnet, daß man die wäßrige Cyanamidlösung mit 0,04 bis 0,06 Gew.-% Magnesiumionen versetzt.

9. Verfahren nach den Ansprüchen 6 bis 8, dadurch gekennzeichnet, daß man die wäßrige Cyanamidlösung mit 0,3 bis 0,5 Gew.-% Magnesiumchlorid $\times$ 6 $H_2O$ (0,14 bis 0,23 Gew.-% $MgCl_2$) oder 0,4 bis 0,6 Gew.-% Magnesiumsulfat $\times$ 7 $H_2O$ (0,2 bis 0,3 Gew.-% $MgSO_4$) versetzt.

10. Verfahren nach einem der Ansprüche 6 bis 9, dadurch gekennzeichnet, daß man die wäßrige Cyanamidlösung nach der Zugabe des Magnesiumsalz-Stabilisators mit einer Mineralsäure oder einer organischen Säure auf einen pH-Wert von etwa 5 bis 3, vorzugsweise auf pH 3,5 bis pH 4,5, einstellt.

11. Verfahren nach einem der Ansprüche 6 bis 9, dadurch gekennzeichnet, daß man die wäßrige Cyanamidlösung vor der Zugabe des Magnesiumsalz-Stabilisators mit einer Mineralsäure oder einer organischen Säure auf einen pH-Wert von etwa 5 bis 3, vorzugsweise auf pH 3,8 bis pH 4,5, einstellt.

12. Verfahren nach einem der Ansprüche 6 bis 11, dadurch gekennzeichnet, daß die Einstellung des pH-Werts mit Phosphorsäure erfolgt.

## Claims

1. Stabilised aqueous solution containing 20 to 80 wt.% of cyanamide, characterised by a content of 0.005 to 0.5 wt.% of divalent magnesium cations in the form of inorganic and/or organic magnesium salts.

2. Solution according to claim 1, characterised by a content of 45 to 55 wt.% of cyanamide.

3. Solution according to claim 1 or 2, characterised by a content of 0.04 to 0.06 wt.% of magnesium ions.

4. Solution according to claim 3, characterised by a content of 0.3 to 0.5 wt.% $MgCl_2 \times 6\ H_2O$ or 0.4 to 0.6 wt.% $MgSO_4 \times 7\ H_2O$.

5. Solution according to one of the preceding claims, characterised by a pH value between 3 and 5.

6. Process for the increasing of the storage stability (stability) of an aqueous solution containing 20 to 80 wt.% of cyanamide, characterised in that one mixes the aqueous cyanamide solution with 0.005 to 0.5 wt.% of divalent magnesium cations (referred to the cyanamide solution) in the form of inorganic and/or organic magnesium salts.

7. Process according to claim 6, characterised in that one mixes commercially-available, already stabilised 45 to 55% aqueous cyanamide solutions with 0.005 to 0.5 wt.% of magnesium ions.

8. Process according to claim 6 or 7, characterised in that one mixes the aqueous cyanamide solution with 0.04 to 0.06 wt.% of magnesium ions.

9. Process according to claims 6 to 8, characterised in that one mixes the aqueous cyanamide solution with 0.3 to 0.5 wt.% magnesium chloride $\times 6\ H_2O$ (0.14 to 0.23 wt.% $MgCl_2$) or 0.4 to 0.6 wt.% magnesium sulphate $\times 7\ H_2O$ (0.2 to 0.3 wt.% $MgSO_4$).

10. Process according to one of claims 6 to 9, characterised in that one adjusts the aqueous cyanamide solution, after the addition of the magnesium salt stabiliser, with a mineral acid or an organic acid to a pH value of about 5 to 3, preferably to pH 3.5 to pH 4.5.

11. Process according to one of claims 6 to 9, characterised in that one adjusts the aqueous cyanamide solution, before the addition of the magnesium salt stabiliser, with a mineral acid or an organic acid to a pH value of about 5 to 3, preferably to pH 3.8 to pH 4.5.

12. Process according to one of claims 6 to 11, characterised in that the adjustment of the pH value takes place with phosphoric acid.

## Revendications

1. Solution aqueuse stabilisée de cyanamide à une concentration de 20 à 80% en poids, caractérisée en ce qu'elle contient de 0,005 à 0,5% en poids de cations magnésium divalents à l'état de sels de magnésium minéraux et/ou organiques.

2. Solution selon la revendication 1, caractérisée en ce qu'elle contient de 45 à 55% en poids de cyanamide.

3. Solution selon la revendication 1 ou 2, caractérisée en ce qu'elle contient de 0,04 à 0,06% en poids d'ions magnésium.

4. Solution selon la revendication 3, caractérisée en ce qu'elle contient de 0,3 à 0,5% en poids de $MgCl_2$, 6 $H_2O$ ou de 0,4 à 0,6% en poids de $MgSO_4$, 7 $H_2O$.

5. Solution selon l'une des revendications qui précèdent, caractérisée en ce qu'elle présente un pH de 3 à 5.

6. Procédé pour accroître la stabilité au stockage (aptitude à la conservation) d'une solution aqueuse contenant 20 à 80% en poids de cyanamide, caractérisé en ce que l'on ajoute à la solution aqueuse de cyanamide de 0,005 à 0,5% en poids de cations magnésium divalents (par rapport à la solution de cyanamide) à l'état de sels de magnésium minéraux et/ou organiques.

7. Procédé selon la revendication 6, caractérisé en ce que l'on ajoute de 0,005 à 0,5% en poids d'ions magnésium à des solutions aqueuses de cyanamide du commerce déjà stabilisées à des concentrations de 45 à 55% en poids.

8. Procédé selon la revendication 6 ou 7, caractérisé en ce que l'on ajoute de 0,04 à 0,06% en poids d'ions magnésium à la solution aqueuse de cyanamide.

9. Procédé selon les revendications 6 à 8, caractérisé en ce que l'on ajoute à la solution aqueuse de cyanamide de 0,3 à 0,5% en poids de chlorure de magnésium à 6 $H_2O$ (0,14 à 0,23% en poids de $MgCl_2$) ou de 0,4 à 0,6% en poids de sulfate de magnésium à 7 $H_2O$ (0,2 à 0,3% en poids de $MgSO_4$).

10. Procédé selon l'une des revendications 6 à 9, caractérisé en ce que, après addition du sel de magnésium stabilisant, on règle la solution aqueuse de cyanamide à un pH d'environ 5 à 3, de préférence à un pH de 3,5 à 4,5, à l'aide d'un acide minéral ou d'un acide organique.

11. Procédé selon l'une des revendications 6 à 9, caractérisé en ce que, avant l'addition du sel de magnésium stabilisant, on règle la solution aqueuse de cyanamide à un pH d'environ 5 à 3, de préférence à un pH de 3,8 à 4,5, à l'aide d'un acide minéral ou d'un acide organique.

12. Procédé selon l'une des revendications 6 à 11, caractérisé en ce que l'on règle le pH à l'aide de l'acide phosphorique.